# EUROPEAN PATENT SPECIFICATION

(11) **EP 3 839 791 B1**
(45) Date of publication and mention of the grant of the patent: **04.10.2023**
(21) Application number: 20214770.8
(22) Date of filing: 16.12.2020
(51) Int. Cl.: G06F 21/64, G06Q 20/38

(54) **IDENTIFICATION AND AUTHORIZATION OF TRANSACTIONS VIA SMART CONTRACTS**
IDENTIFIZIERUNG UND AUTORISIERUNG VON TRANSAKTIONEN ÜBER INTELLIGENTE VERTRÄGE
IDENTIFICATION ET AUTORISATION DE TRANSACTIONS PAR L'INTERMÉDIAIRE DE CONTRATS INTELLIGENTS

(30) Priority: 17.12.2019 US 201916717051
(43) Date of publication of application: 23.06.2021
(73) Proprietor: Capital One Services, LLC, McLean, VA 22102 (US)
(72) Inventor: BENKO, David, McLean, Virginia 22102 (US)
(74) Representative: St Clair Jones, Gregory Arthur Langley

(56) References cited:
- US-A1- 2014 289 110
- Anonymous: "NumberUsedOnce", , 29 October 2015 (2015-10-29), XP055798216, Retrieved from the Internet: URL:https://web.archive.org/web/2015102910 4233/http://meatballwiki.org/wiki/NumberUs edOnce [retrieved on 2021-04-22]

## Description

### FIELD OF USE

Aspects of the disclosure relate generally to transaction processing and more specifically to transaction processing in distributed systems.

### BACKGROUND

Cryptocurrency is a digital asset designed to work as a medium of exchange that uses strong cryptography to secure transactions, control the creation of additional units, and verify the transfer of assets between entities. Cryptocurrencies are typically used in a variety of blockchain systems that use a publicly available ledger to provide a publicly accessible record of transactions processed by the blockchain systems. The parties involved in each transaction are typically anonymous and it is difficult or impossible to ascertain the real-world identity of a particular party to a cryptocurrency transaction.

Due to the anonymous nature of transactions involving cryptocurrencies on blockchain systems, they are unsuited for the majority of legitimate transactions as these transactions do not comply with regulatory measures, such as anti-money laundering and know your customer regulations. Aspects described herein may address these and other problems, and generally improve the quality and security of transactions processed by distributed network systems.

US2014289110 discloses a system and method for facilitating a value exchange transaction.

### SUMMARY

The present invention is defined by the appended independent claims. Dependent claims constitute embodiments of the invention.

The following presents a simplified summary of various aspects described herein. This summary is not an extensive overview, and is not intended to identify key or critical elements or to delineate the scope of the claims. The following summary merely presents some concepts in a simplified form as an introductory prelude to the more detailed description provided below. Corresponding apparatus, systems, and computer-readable media are also within the scope of the disclosure.

Systems described herein may use the issuance and management of digital certificates and a revocation database to limit and monitor participation of parties to conduct transactions in a distributed network system. A compliance server system may validate entities and issue security certificates to entities to conduct transactions on a distributed network system. Once authorized, parties may conduct transactions using digital currencies via a distributed network system. Authorizations from all parties to a transaction may be required prior to executing the transaction. Compliance server systems may add previously issued certificates to a revocation database to prevent associated parties from executing transactions on the distributed network system. Parties may have their authorizations revoked based on regulatory requirements. Additionally, revoked parties may have their assets forfeited.

These features, along with many others, are discussed in greater detail below.

### BRIEF DESCRIPTION OF THE DRAWINGS

The present disclosure is described by way of example and not limited in the accompanying figures in which like reference numerals indicate similar elements and in which:
FIG. 1 shows an example of an operating environment in which one or more aspects described herein may be implemented;
FIG. 2 shows an example computing device in accordance with one or more aspects described herein;
FIG. 3 shows a flow chart of a process for processing transactions according to one or more aspects of the disclosure;
FIG. 4 shows a flow chart of a process for authorizing a party according to one or more aspects of the disclosure; and
FIG. 5 shows a flow chart of a process for enforcing regulatory actions according to one or more aspects of the disclosure.

### DETAILED DESCRIPTION

In the following description of the various embodiments, reference is made to the accompanying drawings, which form a part hereof, and in which is shown by way of illustration various embodiments in which aspects of the disclosure may be practiced. It is to be understood that other embodiments may be utilized and structural and functional modifications may be made without departing from the scope of the present disclosure. Aspects of the disclosure are capable of other embodiments and of being practiced or being carried out in various ways. In addition, it is to be understood that the phraseology and terminology used herein are for the purpose of description and should not be regarded as limiting. Rather, the phrases and terms used herein are to be given their broadest interpretation and meaning.

By way of introduction, systems and methods described herein may use the issuance and management of digital certificates and a revocation database to limit and monitor participation of parties conducting transactions in a distributed network system. A compliance server system may validate entities and issue security certificates to entities to conduct transactions on a distributed network system. Once authorized, parties may conduct transactions using digital currencies via a distributed network system. Authorizations from all parties to a transaction may be required prior to executing the transaction. Compliance server systems may add previously issued certificates to a revocation database to prevent associated parties from executing transactions on the distributed network system. Parties may have their authorizations revoked based on regulatory requirements, such as anti-money laundering, anti-fraud, and regulatory compliance. Additionally, revoked parties may have their assets forfeited. Compliance server systems may include one or more client devices and/or processing nodes of a distributed network system that have been designated as moderators for the distributed network system. Moderator devices may perform additional actions on the other entities in the network, such as authorizing transaction requests, revoking access to execute transactions, and forfeiting assets. Automated and manual monitoring of transactions may occur by a variety of devices, including compliance server systems and moderator devices.

### Operating Environments and Computing Devices

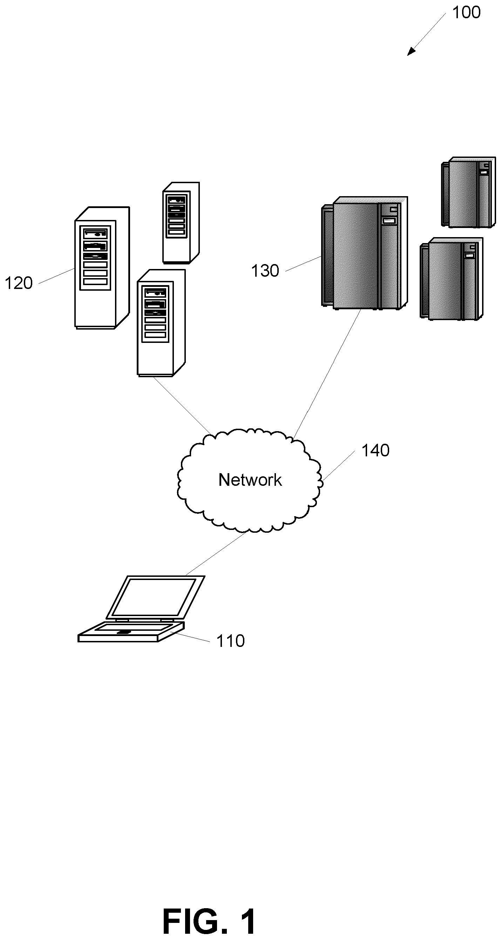

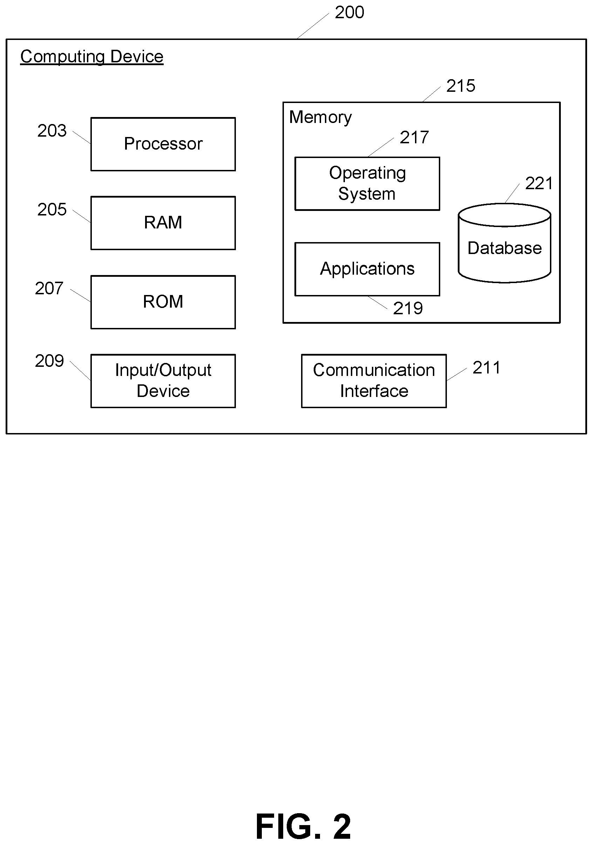

FIG. 1 shows an operating environment 100. The operating environment 100 may include at least one client device 110, at least one compliance server system 130, and/or at least one distributed network system 120 in communication via a network 140. It will be appreciated that the network connections shown are illustrative and any means of establishing a communications link between the computers may be used. The existence of any of various network protocols such as TCP/IP, Ethernet, FTP, HTTP and the like, and of various wireless communication technologies such as GSM, CDMA, WiFi, and LTE, is presumed, and the various computing devices described herein may be configured to communicate using any of these network protocols or technologies. Any of the devices and systems described herein may be implemented, in whole or in part, using one or more computing systems described with respect to FIG. 2.

Client devices 110 may request authorization to conduct transactions and/or request transactions as described herein. Distributed network systems 120 may store data and/or execute transactions as described herein. Compliance server system 130 may authorize clients to conduct transactions, authorize the execution of transactions, and manage authorizations to conduct transactions as described herein. However, it should be noted that any computing device in the operating environment 100 may perform any of the processes and/or store any data as described herein. A distributed network system 120 may be publicly accessible and/or have restricted access. Access to a distributed network system may be limited to particular client devices 110. Some or all of the data described herein may be stored using one or more databases. Databases may include, but are not limited to relational databases, hierarchical databases, distributed databases, in-memory databases, flat file databases, XML databases, NoSQL databases, graph databases, and/or a combination thereof. The network 140 may include a local area network (LAN), a wide area network (WAN), a wireless telecommunications network, and/or any other communication network or combination thereof.

The data transferred to and from various computing devices in operating environment 100 may include secure and sensitive data, such as confidential documents, customer personally identifiable information, and account data. Therefore, it may be desirable to protect transmissions of such data using secure network protocols and encryption, and/or to protect the integrity of the data when stored on the various computing devices. A file-based integration scheme or a service-based integration scheme may be utilized for transmitting data between the various computing devices. Data may be transmitted using various network communication protocols. Secure data transmission protocols and/or encryption may be used in file transfers to protect the integrity of the data such as, but not limited to, File Transfer Protocol (FTP), Secure File Transfer Protocol (SFTP), and/or Pretty Good Privacy (PGP) encryption. In many embodiments, one or more web services may be implemented within the various computing devices. Web services may be accessed by authorized external devices and users to support input, extraction, and manipulation of data between the various computing devices in the operating environment 100. Web services built to support a personalized display system may be cross-domain and/or cross-platform, and may be built for enterprise use. Data may be transmitted using the Secure Sockets Layer (SSL) or Transport Layer Security (TLS) protocol to provide secure connections between the computing devices. Web services may be implemented using the WS-Security standard, providing for secure SOAP messages using XML encryption. Specialized hardware may be used to provide secure web services. Secure network appliances may include built-in features such as hardware-accelerated SSL and HTTPS, WS-Security, and/or firewalls. Such specialized hardware may be installed and configured in the operating environment 100 in front of one or more computing devices such that any external devices may communicate directly with the specialized hardware.

Turning now to FIG. 2, a computing device 200 that may be used with one or more of the computational systems is described. The computing device 200 may include a processor 203 for controlling overall operation of the computing device 200 and its associated components, including RAM 205, ROM 207, input/output device 209, communication interface 211, and/or memory 215. A data bus may interconnect processor(s) 203, RAM 205, ROM 207, memory 215, I/O device 209, and/or communication interface 211. In some embodiments, computing device 200 may represent, be incorporated in, and/or include various devices such as a desktop computer, a computer server, a mobile device, such as a laptop computer, a tablet computer, a smart phone, any other types of mobile computing devices, and the like, and/or any other type of data processing device.

Input/output (I/O) device 209 may include a microphone, keypad, touch screen, and/or stylus through which a user of the computing device 200 may provide input, and may also include one or more of a speaker for providing audio output and a video display device for providing textual, audiovisual, and/or graphical output. Software may be stored within memory 215 to provide instructions to processor 203 allowing computing device 200 to perform various actions. Memory 215 may store software used by the computing device 200, such as an operating system 217, application programs 219, and/or an associated internal database 221. The various hardware memory units in memory 215 may include volatile and nonvolatile, removable and non-removable media implemented in any method or technology for storage of information such as computer-readable instructions, data structures, program modules, or other data. Memory 215 may include one or more physical persistent memory devices and/or one or more non-persistent memory devices. Memory 215 may include, but is not limited to, random access memory (RAM) 205, read only memory (ROM) 207, electronically erasable programmable read only memory (EEPROM), flash memory or other memory technology, optical disk storage, magnetic cassettes, magnetic tape, magnetic disk storage or other magnetic storage devices, or any other medium that may be used to store the desired information and that may be accessed by processor 203.

Communication interface 211 may include one or more transceivers, digital signal processors, and/or additional circuitry and software for communicating via any network, wired or wireless, using any protocol as described herein.

Processor 203 may include a single central processing unit (CPU), which may be a single-core or multi-core processor, or may include multiple CPUs. Processor(s) 203 and associated components may allow the computing device 200 to execute a series of computer-readable instructions to perform some or all of the processes described herein. Although not shown in FIG. 2, various elements within memory 215 or other components in computing device 200, may include one or more caches including, but not limited to, CPU caches used by the processor 203, page caches used by the operating system 217, disk caches of a hard drive, and/or database caches used to cache content from database 221. For embodiments including a CPU cache, the CPU cache may be used by one or more processors 203 to reduce memory latency and access time. A processor 203 may retrieve data from or write data to the CPU cache rather than reading/writing to memory 215, which may improve the speed of these operations. In some examples, a database cache may be created in which certain data from a database 221 is cached in a separate smaller database in a memory separate from the database, such as in RAM 205 or on a separate computing device. For instance, in a multi-tiered application, a database cache on an application server may reduce data retrieval and data manipulation time by not needing to communicate over a network with a back-end database server. These types of caches and others may be included in various embodiments, and may provide potential advantages in certain implementations of devices, systems, and methods described herein, such as faster response times and less dependence on network conditions when transmitting and receiving data.

Although various components of computing device 200 are described separately, functionality of the various components may be combined and/or performed by a single component and/or multiple computing devices in communication without departing from the invention.

### Authorizing and Executing Transactions

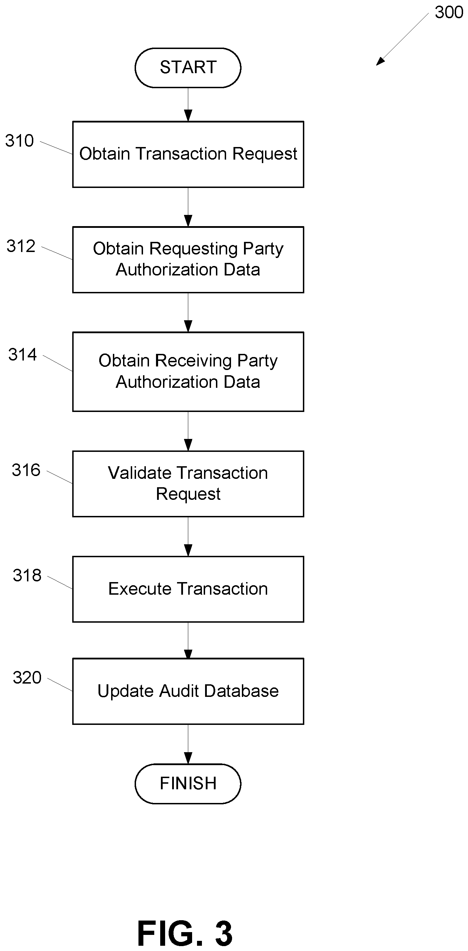

FIG. 3 shows a flow chart of a process for processing transactions according to one or more aspects of the disclosure. Some or all of the steps of process 300 may be performed using one or more computing devices as described herein. In a variety of embodiments, some or all of the steps described below may be combined and/or divided into sub-steps as appropriate.

At step 310, a transaction is obtained. The transaction request data may be generated and/or transmitted by an authorized client device. The transaction request data may indicate a requesting party, a receiving party, a transaction value, a transaction identifier, and/or metadata indicating properties of the requested transaction. The requesting party and/or the receiving party can be indicated using any identifier, such as a user name, account number, network address, email address, and/or issued security certificate. The request data includes a nonce value. The nonce value can be any value that is statistically unique. In a variety of embodiments, the nonce is a randomly generated number. However, any nonce can be used as appropriate.

At step 312, requesting party authorization data is obtained. In a variety of embodiments, the requesting party authorizes the transaction request by signing the transaction request using the security certificate issued to the requesting party. In many embodiments, an authorization request is transmitted to the requesting party and a requesting party authorization is obtained in response to the authorization request.

At step 314, receiving party authorization data may be obtained. In many embodiments, a receiving party authorization request is transmitted to a client device associated with the receiving party. The receiving party authorization request can indicate the requesting party, the transaction identifier, the metadata associated with the transaction request, the requested value, and/or any other information as appropriate. The receiving party authorization data is obtained from the client device associated with the receiving party. In many embodiments, the receiving party authorization data includes, or is signed with, a key indicated in the security certificate assigned to the receiving party. In a variety of embodiments, the key is a private key of a private key/public key pair.

At step 316, a transaction request is validated. A transaction request is validated by validating the obtained authorization data from both the receiving party and the requesting party. In many embodiments, authorization data provided by a party can be validated by determining that the security certificate provided by the party matches the security certificate assigned to the party. In several embodiments, a security certificate can be determined to match by comparing the received security certificate to a security certificate assigned to the party and stored in a party database. In the invention, the security certificate is validated by decrypting the authorization data obtained from the party using a public key associated with the party. The authorization data is authorized by determining that the security certificates are not indicated in a revocation database. Validating the authorization data includes determining if the authorization data was obtained during a threshold time period of obtaining the transaction request. Any threshold time period, such as one second, ten second, or one minute, can be used as appropriate. Validating the transaction request also includes comparing the nonce to an audit database storing previously received nonce values. The transaction request is validated when the nonce has not been previously received and denied when the nonce has been previously received.

At step 318, a transaction is executed. A transaction may be executed by submitting the transaction request and/or authorization data to a distributed network system. Executing the transaction may include verifying the signature using the certificate associated with the entity submitting the transaction. The signature may be verified using a master certificate associated with a compliance server system. The requester's certificate may also be checked for expiry and/or compared against a revocation database to ensure the certificate is still valid. If any other eligibility requirements are needed, such as a regulatory check within a certain timeframe, these requirements may be verified prior to the transaction being executed. A transaction may include a nonce that is stored in an audit database. The nonce may be an incremental integer value where the nonce for each transaction is greater than the nonce for the previously executed transaction. In this way, replay of previously obtained transaction requests can be avoided as each transaction should have a unique nonce.

The distributed network system executes the transaction by executing, using one or more processing nodes of the distributed network system, one or more functions of a smart contract associated with the transaction request. In many embodiments, functions provided by a smart contract use an elliptical curve digital signature as a parameter. The digital signature may be computed on a compact representation of the transaction and the parameters of the transaction. The algorithm to generate the transaction representation may be pre-agreed on and deterministic as appropriate to specific implementations of the disclosure. The smart contract may be identified based on a smart contract address indicated in the transaction request. In several embodiments, a smart contract may be specific to an email address identified in the transaction request. The smart contract address may be a unique identifier for a smart contract stored using a distributed network system. In many embodiments, a smart contract address includes an alphanumeric string beginning with the characters "0x". The smart contract may be executed by sending some or all of the transaction request data to the determined smart contract address. In a variety of embodiments, executing a smart contract includes compiling the smart contract into bytecode that may be executed by one or more nodes of a distributed network system.

At step 320, an audit database is updated. An audit database may store a variety of audit data. Audit data may include any of a variety of data including, but not limited to, the date and/or time the transaction request was generated and/or obtained, information identifying the user and/or computing devices generating, transmitting, and/or verifying the transaction request, authorization data, validation results, the nonce associated with the transaction, and the like. In several embodiments, the audit data is encrypted using a master certificate associated with a compliance server system. In the invention, the audit data is recorded on a distributed ledger and smart contract maintained by a distributed network system. The audit is stored using a function provided by a smart contract and a data block maintained on a distributed ledger. A data block may include the sharing session data and/or header data. The header data may include a variety of data including, but not limited to, a unique identifier for the data block, metadata describing the structure of the audit data, an identifier of a previous (e.g. parent) block, the time the data block was generated, and/or a verification hash. The verification hash may be used to verify the data block is valid and has not been altered. In a number of embodiments, the verification hash may include an alphanumeric string generated based on the sharing session data using any hashing function, such as MD5. In several embodiments, the verification hash may be based on the data block and the previous block.

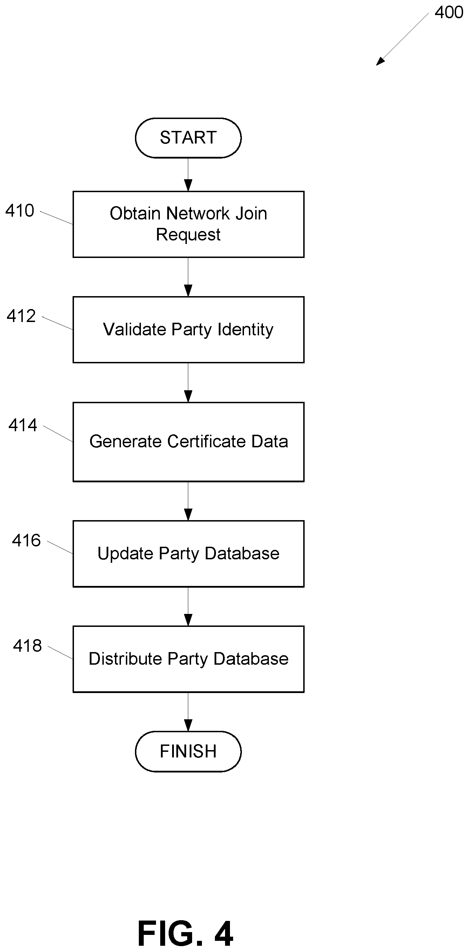

FIG. 4 shows a flow chart of a process for authorizing a party according to one or more aspects of the disclosure. Some or all of the steps of process 400 may be performed using one or more computing devices as described herein. In a variety of embodiments, some or all of the steps described below may be combined and/or divided into sub-steps as appropriate.

At step 410, a network join request may be obtained. A network join request may indicate a computing device that wishes to execute transactions on a distributed network system that is managed by a compliance server system. The compliance server system may have an associated master security certificate. In many embodiments, the master security certificate includes a security key, such as a secp256k1 ECC key. The master security certificate may be used as a certificate authority for generating and verifying security certificates for other devices that have joined the network. The master security certificate may be either self-signed by the compliance server system and/or signed using a third-party certificate authority.

In several embodiments, a network join request can be provided by a party that had previously been authorized but has an expiring security certificate. If a party's certificate needs to be updated (for example, due to certificate expiration or the certificate being explicitly revoked as described herein), the party may provide a network join request to the compliance server system to reevaluate the party's eligibility to continue participation in the network.

At step 412, a party identity may be validated. The identity of the party requesting to join the network may be verified to ensure that the entity may be authorized to conduct transactions, such as verifying that the party is not barred from requesting transactions by any regulatory authorities. In a number of embodiments, a network join request may indicate an internet protocol (IP) address of the sender of the network join request. The IP address may be compared to a known list of IP addresses that are barred from executing transactions. Any of a variety of other information, such as social security numbers, driver license numbers, legal name, address, date of birth, and the like, can also be provided in the network join request and verified to validate the party identity.

At step 414, certificate data may be generated. In a variety of embodiments, the master security certificate includes a secp256k1 ECC key. Certificate data may be generated based on the master security certificate. For example, the master security certificate can be used to generate a security certificate having public/private key pair for the requesting party. In several embodiments, the master security certificate is used to sign a generated X.509 certificate for the requesting party. The certificate data may indicate an expiration time, after which the party associated with the certificate data may need to be re-validated.

At step 416, a party database may be updated. The party database may store parties that are authorized to conduct transactions, the security certificates associated with those parties, and/or any other data related to a validated party. In a number of embodiments, only those requesting parties that have validated identities are authorized parties. The data stored for a party in the party database can also include the last time an Office of Foreign Asset Control check was conducted and/or an indicator if the party has been designated as a moderator. Moderators can perform a variety of functions allocated to the compliance server system, such as authorizing transaction requests, placing parties in a revocation database, revoking wallets, and/or any other processes as described herein. In several embodiments, a valid X.509 certificate signed by the compliance server system and associated with a secp256k1 ECC key is required to be associated with a party before the party can be authorized and recorded in the party database.

At step 418, a party database may be distributed. In a variety of embodiments, the party database is transmitted to one or more nodes of a distributed network system. In many embodiments, the party database is maintained as one or more functions of a smart contract executing on a distributed network system. In a number of embodiments, a node in the distributed network system transmits the party database and/or smart contract to some or all of the other nodes in the distributed network system.

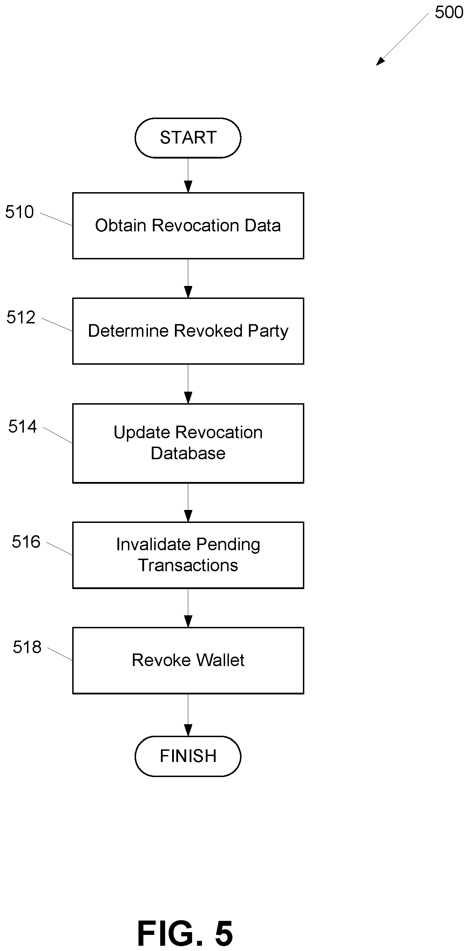

FIG. 5 shows a flow chart of a process for enforcing regulatory actions according to one or more aspects of the disclosure. Some or all of the steps of process 500 may be performed using one or more computing devices as described herein. In a variety of embodiments, some or all of the steps described below may be combined and/or divided into sub-steps as appropriate.

At step 510, revocation data may be obtained. Revocation data may indicate one or more parties that have been previously authorized to conduct transactions via the distributed network system. The revocation data can be obtained from any of a variety of sources, such as regulatory bodies like the Office of Foreign Asset Control.

At step 512, a revoked party may be determined. The revoked party may be determined based on the revocation data. The revocation data can indicate any identifying information, such as an internet protocol (IP) address, social security number, driver license number, legal name, address, date of birth, and the like. The revoked party may be determined by comparing the identifying information in the revocation data to the list of parties stored in a party database to determine matching parties.

At step 514, a revocation database may be updated. The revocation database can be used to identify parties that have been barred from requesting transactions to be executed via a distributed network system. Any information regarding the party, including security certificates associated with the party, can be recorded in the revocation database. Any signatures, such as those to validate transaction requests, including security certificates in the revocation database may be treated as invalid. When a security certificate is added to the revocation database, a keccak256 (e.g. SHA3) hash of the security certificate may be added to the revocation database. The revocation database may be stored using a distributed network system. In several embodiments, the revocation database is provided as one or more functions of a smart contract as described herein. In a variety of embodiments, the revocation database is immutable.

At step 516, pending transactions may be invalidated. When a party has their authorization to perform transaction revoked, the party may not sign and perform any transactions and the party is therefore unable to send or receive tokens. While future transaction requests from a revoked party may be rejected outright, transaction requests provided by the party while their access was still valid but have yet to be executed may be invalidated such that the transaction will not execute. Pending transactions can include any transaction requests involving, either as a requesting party and/or as a receiving party, the party identified in the revocation data. Transactions may be pending when a transaction request has been received but an authorization from any of the requesting party, receiving party, moderators, and/or compliance server system has yet to be received such that the transaction request has yet to be executed. When a transaction request is signed by a certificate stored in the revocation database, the transaction may be invalidated as the transaction request will be unable to obtain authorization from all necessary parties.

At step 518, a wallet may be revoked. In cases of legal or regulatory compliance, seizure of the value associated with a party may be necessary. A wallet revocation forcibly reassociates value from one party to another. The wallet may be associated with the revoked party and store value that can be transferred to other wallets maintained by the distributed network system. The wallet may be revoked by preventing transactions associated with the wallet, transferring value from the wallet to an escrow/impound account, and/or refunding transactions to parties involved in invalidated transactions. In several embodiments, moderators may revoke a wallet. Revoking a wallet may require a forfeiture authorization and a forfeiture confirmation. Moderators may request a forfeiture authorization. The moderator may authorize a wallet revocation for a specified amount of tokens with a nonce and a signed transaction request. The digital signature of the forfeiture authorization request may be checked against the authorization database and revocation database to ensure that the moderator requesting the revocation is authorized to do so. A compliance server system may confirm the forfeiture authorization. Once confirmed, the revoking of the wallet and/or movement of a designated value from the revoked wallet can be performed.

One or more aspects discussed herein may be embodied in computer-usable or readable data and/or computer-executable instructions, such as in one or more program modules, executed by one or more computers or other devices as described herein. Generally, program modules include routines, programs, objects, components, data structures, and the like. that perform particular tasks or implement particular abstract data types when executed by a processor in a computer or other device. The modules may be written in a source code programming language that is subsequently compiled for execution, or may be written in a scripting language such as (but not limited to) HTML or XML. The computer executable instructions may be stored on a computer readable medium such as a hard disk, optical disk, removable storage media, solid-state memory, RAM, and the like. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects discussed herein, and such data structures are contemplated within the scope of computer executable instructions and computer-usable data described herein. Various aspects discussed herein may be embodied as a method, a computing device, a system, and/or a computer program product.

Although the present invention has been described in certain specific aspects, many additional modifications and variations would be apparent to those skilled in the art. In particular, any of the various processes described above may be performed in alternative sequences and/or in parallel (on different computing devices) in order to achieve similar results in a manner that is more appropriate to the requirements of a specific application. Thus, embodiments of the present invention should be considered in all respects as illustrative and not restrictive. Accordingly, the scope of the invention should be determined not by the embodiments illustrated, but by the appended claims

## Claims

1. A computing device, comprising:
one or more processors; and
memory storing instructions that, when executed by the one or more processors, cause the computing device to:
store, in one or more smart contracts maintained by a distributed network system, a revocation database comprising security certificates to be treated as invalid and an audit database comprising previously received nonce values;
obtain (310), from a requesting device, a request to execute a transaction, wherein the request comprises transaction request data indicating:
a security certificate associated with the requesting device; and
a receiving party, a transaction value, and a nonce;
transmit a receiving party authorization request to a client device associated with the receiving party;
obtain (314), from the client device associated with the receiving party, authorization data associated with the receiving party;
wherein the instructions cause the computing device to validate (316) the transaction request by causing the computing device to:
compare the security certificate associated with the requesting device with the invalid security certificates stored in the revocation database;
compare the nonce to the audit database to determine that the nonce has not been previously received;
determine that the authorization data associated with the receiving party was obtained during a threshold time period of obtaining the transaction request; and
decrypt the authorization data obtained from the receiving party using a public key associated with the receiving party;
wherein the instructions further cause the computing device to:
initiate, based on the request to execute the transaction and the validation of the transaction request, a transfer of the transaction value from a wallet associated with the requesting device to a wallet associated with the client device by sending data comprising an indication to execute (318) a smart contract to the distributed network system; and
updating (320) the audit database based on the nonce.

2. The computing device of claim 1, wherein the instructions, when executed by the one or more processors, further cause the computing device to generate the security certificate associated with the requesting device based on a master security certificate maintained by the computing device.

3. The computing device of claim 2, wherein the master security certificate comprises a secp256k1 ECC key.

4. The computing device of claim 1, wherein the instructions, when executed by the one or more processors, further cause the computing device to validate the receiving party, by comparing a security certificate associated with the client device with the invalid security certificates stored in the revocation database.

5. The computing device of claim 4, wherein the instructions, when executed by the one or more processors, further cause the computing device to generate the security certificate associated with the client device based on a master security certificate maintained by the computing device.

6. The computing device of claim 1, wherein the instructions, when executed by the one or more processors, further cause the computing device to:
obtain a revocation request identifying the requesting device;
update the revocation database to include the security certificate associated with the requesting device; and
deny a second request based on the security certificate associated with the requesting device being included in the revocation database.

7. The computing device of claim 6, wherein the instructions, when executed by the one or more processors, cause the computing device to transfer, based on the security certificate associated with the requesting device being indicated on the revocation list, all value stored using the wallet associated with the requesting device to a wallet associated with an impound device.

8. The computing device of claim 1, wherein the wallet associated with the requesting device and the wallet associated with the client device are maintained using the distributed network system.

9. A method, comprising:
storing, in one or more smart contracts maintained by a distributed network system, a revocation database comprising security certificates to be treated as invalid and an audit database comprising previously received nonce values;
obtaining (310), by a computing device and from a requesting device, a request to execute a transaction, wherein the request comprises transaction request data indicating:
a security certificate associated with the requesting device; and
a receiving party, a transaction value, and a nonce; transmitting by the computing device,
a receiving party authorization request to a client device associated with the receiving party;
obtaining (314), by the computing device and from the client device associated with the receiving party, authorization data associated with the receiving party;
validating by the computing device, the transaction request by:
comparing the security certificate associated with the requesting device with the invalid security certificates storied in the revocation database;
comparing the nonce to the audit database to determine that the nonce has not been previously received;
determining that the authorization data associated with the receiving party was obtained during a threshold time period of obtaining the transaction request; and
decrypting the authorization data obtained from the receiving party using a public key associated with the receiving party;
the method further comprising:
initiating, by the computing device and based on the request to execute the transaction and the validation of the transaction request, a transfer of the transaction value from a wallet associated with the requesting device to a wallet associated with the client device by causing execution (318) of a smart contract maintained by the distributed network system; and
updating by the computing device, the audit database based on the nonce.

10. The method of claim 9, further comprising:
generating, by the computing device, the security certificate associated with the requesting device based on a master security certificate maintained by the computing device; and
generating, by the computing device, the security certificate associated with the client device based on a master security certificate maintained by the computing device.

11. The method of claim 9, further comprising:
obtaining, by the computing device, a revocation request identifying the requesting device;
updating, by the computing device, the revocation database to include the security certificate associated with the requesting device; and
denying, by the computing device, a second request based on the security certificate associated with the requesting device being indicated on the revocation database.

12. The method of claim 11, further comprising transferring, by the computing device and based on the security certificate associated with the requesting device being indicated on the revocation database, all value stored using the wallet associated with the requesting device to a wallet associated with an impound device.

13. A computer readable medium comprising computer-executable instructions which, when executed by a processor, cause the processor to perform a method according to any of claims 9 to 12.

## Patentansprüche

1. Rechenvorrichtung, umfassend:
einen oder mehrere Prozessoren; und
Speicher, der Anweisungen speichert, die bei Ausführung durch den einen oder die mehreren Prozessoren die Rechenvorrichtung veranlassen zum:
Speichern, in einem oder mehreren Smart Contracts, die durch ein verteiltes Netzwerksystem unterhalten werden, einer Ungültigkeitserklärungsdatenbank, die Sicherheitszertifikate umfasst, die als ungültig zu behandeln sind, und einer Audit-Datenbank, die zuvor empfangene Nonce-Werte umfasst;
Erhalten (310), von einer anfordernden Vorrichtung, einer Anforderung zum Ausführen einer Transaktion, wobei die Anforderung Transaktionsanforderungsdaten umfasst, die angeben:
ein Sicherheitszertifikat, das mit der anfordernden Vorrichtung assoziiert ist; und
eine empfangende Partei, einen Transaktionswert und eine Nonce;
Übertragen einer Autorisierungsanforderung für die empfangende Partei zu einer Client-Vorrichtung, die mit der empfangenden Partei assoziiert ist;
Erhalten (314), von der Client-Vorrichtung, die mit der empfangenden Partei assoziiert ist, von Autorisierungsdaten, die mit der empfangenden Partei assoziiert sind;
wobei die Anweisungen die Rechenvorrichtung veranlassen, die Transaktionsanforderung zu validieren (316), indem die Rechenvorrichtung veranlasst wird zum:
Vergleichen des mit der anfordernden Vorrichtung assoziierten Sicherheitszertifikats mit den ungültigen Sicherheitszertifikaten, die in der Ungültigkeitserklärungsdatenbank gespeichert sind;
Vergleichen der Nonce mit der Audit-Datenbank, um zu bestimmen, dass die Nonce nicht zuvor empfangen wurde;
Bestimmen, dass die mit der empfangenden Partei assoziierten Autorisierungsdaten während eines Schwellenzeitraums zum Erhalten der Transaktionsanforderung erhalten wurden; und
Entschlüsseln der von der empfangenden Partei erhaltenen Autorisierungsdaten unter Verwendung eines öffentlichen Schlüssels, der mit der empfangenden Partei assoziiert ist;
wobei die Anweisungen die Rechenvorrichtung ferner veranlassen zum:
Initiieren, basierend auf der Anforderung zum Ausführen der Transaktion und der Validierung der Transaktionsanforderung, eines Transfers des Transaktionswerts von einem Wallet, das mit der anfordernden Vorrichtung assoziiert ist, zu einem Wallet, das mit der Client-Vorrichtung assoziiert ist, durch Senden von Daten, die eine Angabe zum Ausführen (318) eines Smart Contracts umfassen, an das verteilte Netzwerksystem; und
Aktualisieren (320) der Audit-Datenbank basierend auf der Nonce.

2. Rechenvorrichtung nach Anspruch 1, wobei die Anweisungen bei Ausführung durch den einen oder die mehreren Prozessoren die Rechenvorrichtung ferner veranlassen zum Erzeugen des mit der anfordernden Vorrichtung assoziierten Sicherheitszertifikats basierend auf einem Master-Sicherheitszertifikat, das durch die Rechenvorrichtung unterhalten wird.

3. Rechenvorrichtung nach Anspruch 2, wobei das Master-Sicherheitszertifikat einen secp256k1-ECC-Schlüssel umfasst.

4. Rechenvorrichtung nach Anspruch 1, wobei die Anweisungen bei Ausführung durch den einen oder die mehreren Prozessoren die Rechenvorrichtung ferner veranlassen zum Validieren der empfangenden Partei durch Vergleichen eines mit der Client-Vorrichtung assoziierten Sicherheitszertifikats mit den ungültigen Sicherheitszertifikaten, die in der Ungültigkeitserklärungsdatenbank gespeichert sind.

5. Rechenvorrichtung nach Anspruch 4, wobei die Anweisungen bei Ausführung durch den einen oder die mehreren Prozessoren die Rechenvorrichtung ferner veranlassen zum Erzeugen des mit der Client-Vorrichtung assoziierten Sicherheitszertifikats basierend auf einem Master-Sicherheitszertifikat, das durch die Rechenvorrichtung unterhalten wird.

6. Rechenvorrichtung nach Anspruch 1, wobei die Anweisungen bei Ausführung durch den einen oder die mehreren Prozessoren die Rechenvorrichtung ferner veranlassen zum:
Erhalten einer Ungültigkeitserklärungsanforderung, die die anfordernde Vorrichtung identifiziert;
Aktualisieren der Ungültigkeitserklärungsdatenbank, um das mit der anfordernden Vorrichtung assoziierte Sicherheitszertifikat einzuschließen; und
Verweigern einer zweiten Anforderung basierend darauf, dass das mit der anfordernden Vorrichtung assoziierte Sicherheitszertifikat in der Ungültigkeitserklärungsdatenbank eingeschlossen ist.

7. Rechenvorrichtung nach Anspruch 6, wobei die Anweisungen bei Ausführung durch den einen oder die mehreren Prozessoren die Rechenvorrichtung ferner veranlassen zum Transferieren, basierend darauf, dass das mit der anfordernden Vorrichtung assoziierte Sicherheitszertifikat in der Ungültigkeitserklärungsliste angegeben wird, des gesamten Werts, der unter Verwendung des mit der anfordernden Vorrichtung assoziierten Wallet gespeichert wurde, zu einem Wallet, das mit einer Beschlagnahmungsvorrichtung assoziiert ist.

8. Rechenvorrichtung nach Anspruch 1, wobei das mit der anfordernden Vorrichtung assoziierte Wallet und das mit der Client-Vorrichtung assoziierte Wallet unter Verwendung des verteilten Netzwerksystems unterhalten werden.

9. Verfahren, umfassend:
Speichern, in einem oder mehreren Smart Contracts, die durch ein verteiltes Netzwerksystem unterhalten werden, einer Ungültigkeitserklärungsdatenbank, die Sicherheitszertifikate umfasst, die als ungültig zu behandeln sind, und einer Audit-Datenbank, die zuvor empfangene Nonce-Werte umfasst;
Erhalten (310), durch eine Rechenvorrichtung und von einer anfordernden Vorrichtung, einer Anforderung zum Ausführen einer Transaktion, wobei die Anforderung Transaktionsanforderungsdaten umfasst, die angeben:
ein Sicherheitszertifikat, das mit der anfordernden Vorrichtung assoziiert ist; und
eine empfangende Partei, einen Transaktionswert und eine Nonce;
Übertragen, durch die Rechenvorrichtung, einer Autorisierungsanforderung für die empfangende Partei zu einer Client-Vorrichtung, die mit der empfangenden Partei assoziiert ist;
Erhalten (314), durch die Rechenvorrichtung und von der Client-Vorrichtung, die mit der empfangenden Partei assoziiert ist, von Autorisierungsdaten, die mit der empfangenden Partei assoziiert sind;
Validieren, durch die Rechenvorrichtung, der Transaktionsanforderung durch:
Vergleichen des mit der anfordernden Vorrichtung assoziierten Sicherheitszertifikats mit den ungültigen Sicherheitszertifikaten, die in der Ungültigkeitserklärungsdatenbank gespeichert sind;
Vergleichen der Nonce mit der Audit-Datenbank, um zu bestimmen, dass die Nonce nicht zuvor empfangen wurde;
Bestimmen, dass die mit der empfangenden Partei assoziierten Autorisierungsdaten während eines Schwellenzeitraums zum Erhalten der Transaktionsanforderung erhalten wurden; und
Entschlüsseln der von der empfangenden Partei erhaltenen Autorisierungsdaten unter Verwendung eines öffentlichen Schlüssels, der mit der empfangenden Partei assoziiert ist;
wobei das Verfahren ferner umfasst:
Initiieren, durch die Rechenvorrichtung und basierend auf der Anforderung zum Ausführen der Transaktion und der Validierung der Transaktionsanforderung, eines Transfers des Transaktionswerts von einem Wallet, das mit der anfordernden Vorrichtung assoziiert ist, zu einem Wallet, das mit der Client-Vorrichtung assoziiert ist, durch Veranlassen der Ausführung (318) eines Smart Contracts, der durch das verteilte Netzwerksystem unterhalten wird; und
Aktualisieren, durch die Rechenvorrichtung, der Audit-Datenbank basierend auf der Nonce.

10. Verfahren nach Anspruch 9, ferner umfassend:
Erzeugen, durch die Rechenvorrichtung, des mit der anfordernden Vorrichtung assoziierten Sicherheitszertifikats basierend auf einem Master-Sicherheitszertifikat, das durch die Rechenvorrichtung unterhalten wird; und
Erzeugen, durch die Rechenvorrichtung, des mit der Client-Vorrichtung assoziierten Sicherheitszertifikats basierend auf einem Master-Sicherheitszertifikat, das durch die Rechenvorrichtung unterhalten wird.

11. Verfahren nach Anspruch 9, ferner umfassend:
Erhalten, durch die Rechenvorrichtung, einer Ungültigkeitserklärungsanforderung, die die anfordernde Vorrichtung identifiziert;
Aktualisieren, durch die Rechenvorrichtung, der Ungültigkeitserklärungsdatenbank, um das mit der anfordernden Vorrichtung assoziierte Sicherheitszertifikat einzuschließen; und
Verweigern, durch die Rechenvorrichtung, einer zweiten Anforderung basierend darauf, dass das mit der anfordernden Vorrichtung assoziierte Sicherheitszertifikat in der Ungültigkeitserklärungsdatenbank angegeben wird.

12. Verfahren nach Anspruch 11, ferner umfassend Transferieren, durch die Rechenvorrichtung und basierend darauf, dass das mit der anfordernden Vorrichtung assoziierte Sicherheitszertifikat in der Ungültigkeitserklärungsliste angegeben wird, des gesamten Werts, der unter Verwendung des mit der anfordernden Vorrichtung assoziierten Wallet gespeichert wurde, zu einem Wallet, das mit einer Beschlagnahmungsvorrichtung assoziiert ist.

13. Computerlesbares Medium, das computerausführbare Anweisungen umfasst, die bei Ausführung durch einen Prozessor den Prozessor veranlassen, ein Verfahren nach einem der Ansprüche 9 bis 12 durchzuführen.

## Revendications

1. Dispositif informatique comprenant :
un ou plusieurs processeurs ; et
une mémoire stockant des instructions qui, lorsqu'elles sont exécutées par un ou plusieurs processeurs, amènent le dispositif informatique à :
stocker, dans un ou plusieurs contrats intelligents gérés par un système de réseau distribué, une base de données de révocation comprenant des certificats de sécurité à traiter comme non valides et une base de données d'audit comprenant des valeurs de nonce précédemment reçues ;
obtenir (310), en provenance d'un dispositif demandeur, une demande d'exécution d'une transaction, où la demande comprend des données de demande de transaction indiquant :
un certificat de sécurité associé au dispositif demandeur ; et
un destinataire, une valeur de transaction et un nonce ; transmettre une demande d'autorisation du destinataire à un dispositif client associé au destinataire ;
obtenir (314), en provenance du dispositif client associé au destinataire, les données d'autorisation associées au destinataire ;
où les instructions amènent le dispositif informatique à valider (316) la demande de transaction en amenant le dispositif informatique à :
comparer le certificat de sécurité associé au dispositif demandeur aux certificats de sécurité non valides stockés dans la base de données de révocation ;
comparer le nonce à la base de données d'audit pour déterminer que le nonce n'a pas été reçu précédemment ;
déterminer que les données d'autorisation associées au destinataire ont été obtenues au cours d'une période seuil d'obtention de la demande de transaction ; et
décrypter les données d'autorisation obtenues du destinataire à l'aide d'une clé publique associée au destinataire ;
où les instructions amènent en outre le dispositif informatique à :
initier, sur la base de la demande d'exécution de la transaction et de la validation de la demande de transaction, un transfert de la valeur de la transaction depuis un portefeuille associé au dispositif demandeur vers un portefeuille associé au dispositif client en envoyant des données comprenant une indication d'exécution (318) d'un contrat intelligent au système de réseau distribué ; et
mettre à jour (320) la base de données d'audit sur la base du nonce.

2. Dispositif informatique selon la revendication 1, dans lequel les instructions, lorsqu'elles sont exécutées par les un ou plusieurs processeurs, amènent en outre le dispositif informatique à générer le certificat de sécurité associé au dispositif demandeur sur la base d'un certificat de sécurité principal géré par le dispositif informatique.

3. Dispositif informatique selon la revendication 2, dans lequel le certificat de sécurité principal comprend une clé ECC secp256k1.

4. Dispositif informatique selon la revendication 1, dans lequel les instructions, lorsqu'elles sont exécutées par les un ou plusieurs processeurs, amènent en outre le dispositif informatique à valider le destinataire, en comparant un certificat de sécurité associé au dispositif client aux certificats de sécurité non valides stockés dans la base de données de révocation.

5. Dispositif informatique selon la revendication 4, dans lequel les instructions, lorsqu'elles sont exécutées par les un ou plusieurs processeurs, amènent en outre le dispositif informatique à générer le certificat de sécurité associé au dispositif client sur la base d'un certificat de sécurité principal géré par le dispositif informatique.

6. Dispositif informatique selon la revendication 1, dans lequel les instructions, lorsqu'elles sont exécutées par les un ou plusieurs processeurs, amènent en outre le dispositif informatique à :
obtenir une demande de révocation identifiant le dispositif demandeur ;
mettre à jour la base de données de révocation pour inclure le certificat de sécurité associé au dispositif demandeur ; et
refuser une deuxième demande en fonction du fait que le certificat de sécurité associé au dispositif demandeur est inclus dans la base de données de révocation.

7. Dispositif informatique selon la revendication 6, dans lequel les instructions, lorsqu'elles sont exécutées par les un ou plusieurs processeurs, amènent le dispositif informatique à transférer, sur la base du certificat de sécurité associé au dispositif demandeur figurant sur la liste de révocation, toutes les valeurs stockées à l'aide du portefeuille associé au dispositif demandeur vers un portefeuille associé à un dispositif de retenue.

8. Dispositif informatique selon la revendication 1, dans lequel le portefeuille associé au dispositif demandeur et le portefeuille associé au dispositif client sont gérés à l'aide du système de réseau distribué.

9. Procédé comprenant :
le stockage, dans un ou plusieurs contrats intelligents gérés par un système de réseau distribué, d'une base de données de révocation comprenant des certificats de sécurité à traiter comme non valides et une base de données d'audit comprenant des valeurs de nonce précédemment reçues ;
l'obtention (310), par un dispositif informatique et en provenance d'un dispositif demandeur, d'une demande d'exécution d'une transaction, où la demande comprend des données de demande de transaction indiquant :
un certificat de sécurité associé au dispositif demandeur ; et
un destinataire, une valeur de transaction et un nonce ; la transmission, par le dispositif informatique, d'une demande d'autorisation de destinataire à un dispositif client associé au destinataire ;
l'obtention (314), par le dispositif informatique et en provenance du dispositif client associé au destinataire, des données d'autorisation associées au destinataire ;
la validation, par le dispositif informatique, de la demande de transaction en :
comparant le certificat de sécurité associé au dispositif demandeur aux certificats de sécurité non valides stockés dans la base de données de révocation ;
comparant le nonce à la base de données d'audit pour déterminer que le nonce n'a pas été reçu précédemment ;
déterminant que les données d'autorisation associées au destinataire ont été obtenues au cours d'une période seuil d'obtention de la demande de transaction ; et
décryptant les données d'autorisation obtenues du destinataire à l'aide d'une clé publique associée au destinataire ;
le procédé comprenant en outre :
l'initialisation, par le dispositif informatique et sur la base de la demande d'exécution de la transaction et de la validation de la demande de transaction, d'un transfert de la valeur de la transaction depuis un portefeuille associé au dispositif demandeur vers un portefeuille associé au dispositif client en provoquant l'exécution (318) d'un contrat intelligent géré par le système de réseau distribué ; et
la mise à jour, par le dispositif informatique, de la base de données d'audit sur la base du nonce.

10. Procédé selon la revendication 9, comprenant en outre :
la génération, par le dispositif informatique, du certificat de sécurité associé au dispositif demandeur sur la base d'un certificat de sécurité principal géré par le dispositif informatique ; et
la génération, par le dispositif informatique, du certificat de sécurité associé au dispositif client sur la base d'un certificat de sécurité principal géré par le dispositif informatique.

11. Procédé selon la revendication 9, comprenant en outre :
l'obtention, par le dispositif informatique, d'une demande de révocation identifiant le dispositif demandeur ;
la mise à jour, par le dispositif informatique, de la base de données de révocation afin d'inclure le certificat de sécurité associé au dispositif demandeur ; et
le refus, par le dispositif informatique, d'une deuxième demande en fonction du fait que le certificat de sécurité associé au dispositif demandeur est inclus dans la base de données de révocation.

12. Procédé selon la revendication 11, comprenant en outre le transfert, par le dispositif informatique et sur la base du certificat de sécurité associé au dispositif demandeur étant indiqué dans la base de données de révocation, de toutes les valeurs stockées à l'aide du portefeuille associé au dispositif demandeur vers un portefeuille associé à un dispositif de retenue.

13. Support lisible par ordinateur comprenant des instructions exécutables par ordinateur qui, lorsqu'elles sont exécutées par un processeur, amènent le processeur à exécuter un procédé selon l'une quelconque des revendications 9 à 12.
